# FASCICULE DE BREVET EUROPEEN

(11) **EP 0 599 712 B1**
(45) Date de publication et mention de la délivrance du brevet: **29.10.1997**
(21) Numéro de dépôt: 93402819.2
(22) Date de dépôt: 19.11.1993
(51) Int. Cl.: C08F 214/18, C09D 127/12

(54) **Copolymère fluoré durcissable sous forme de poudre, son procédé de fabrication, son application dans les revêtements poudre**
Härtbares, pulverförmiges Fluorcopolymer, Verfahren zu seiner Herstellung und seine Anwendung in Pulverlacken
Curable fluorocopolymer in powder form, process for its production and its use in coating powders

(30) Priorité: 23.11.1992 FR 9214035
(43) Date de publication de la demande: 01.06.1994
(73) Titulaire: ELF ATOCHEM S.A., 92800 Puteaux (FR)
(72) Inventeur: Kappler, Patrick, F-69130 Ecully (FR); Perillon, Jean-Luc, F-27300 Bernay (FR); Baudrand, Marcel, F-69700 Givors (FR)

(56) Documents cités:
- EP-A- 0 212 508
- EP-A- 0 281 991
- EP-A- 0 301 557
- EP-A- 0 338 498

## Description

La présente invention concerne un copolymère fluoré durcissable de tétrafluoroéthylène (C₂F₄), de fluorure de vinylidène (C₂H₂F₂) et de dérivé allylique comportant un motif 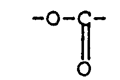 et une fonction acide carboxylique. Ce copolymère se présente sous forme de particules facilement réductibles en poudre par simple broyage à température ambiante. Ce copolymère est particulièrement adapté pour les revêtements à partir de poudre, comme par exemple par projection électrostatique.

Depuis quelques années, les techniques de revêtements à partir de poudres sont préconisées afin d'éviter la pollution de l'environnement par les peintures contenant des solvants.

Par ailleurs les revêtements à base de polymères fluorés présentent en général l'avantage de bien résister aux intempéries et aux rayonnements solaires. Dans le cas du polyfluorure de vinylidène la tenue dans le temps est excellente, mais les revêtements sont difficiles à mettre en oeuvre. Le procédé coil coating nécessite l'utilisation à chaud de solvants. Le polyfluorure de vinylidène peut également être appliqué par poudrage, mais dans ce cas un broyage cryogénique coûteux est préalablement indispensable. Avec les copolymères de C₂H₂F₂, en particulier les copolymères C₂H₂F₂-C₂F₄ et C₂H₂F₂-C₂F₄-C₃F₆ (hexafluoropropylène) la mise en solution est plus aisée, mais le broyage cryogénique est toujours nécessaire pour réaliser des poudres. C'est par exemple le cas des produits obtenus selon les FR.A 2488260, FR.A 2646428 et FR.A 2654432.

Dans le EP 301557 est décrit, pour la fabrication de poudre pour peinture, un copolymère obtenu indifféremment à partir de C₂H₂F₂, C₂F₄, C₃F₆, C₂F₃Cl (trifluorochloroéthylène) et de composé éthylénique portant comme groupement réactif réticulable une fonction hydroxy ou seulement un groupement carboxy. Dans ces condition on obtient un copolymère en masse difficile à broyer après séchage qui, pour être réduit en poudre doit être broyé dans un broyeur à marteau, c'est à dire dans un système de broyage cryogénique.

Des revêtements applicables sous forme de poudre sont également décrits dans le US.A 4916188 et le JP 2060968. Selon ces documents il s'agit de copolymères fluorés hydroxylés et d'isocyanates bloqués.

De façon générale l'association de monomère oléfinique fluoré et de monomères carboxylés est connue pour les applications peintures en milieu solvant. Par exemple dans le FR.A 2631627 est décrit un copolymère de C₂F₃Cl, d'éther vinylique, d'ester vinylique et de monomère porteur de groupe acide tel l'allyloxyacétique, l'acide méthacrylique ou l'acide vinylacétique. L'association de tels monomères aux couples C₂F₂H₂-C₂F₄ ne permet pas de réaliser un copolymère susceptible d'être présenté sous forme de poudre. Il en est de même du JP.3212459 selon lequel sont copolymérisés du C₂F₃Cl et de l'éther ou ester vinylique en association avec un monomère de formule : 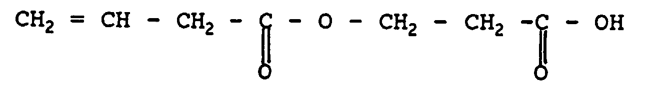 Outre que cette formulation ne peut conduire à un copolymère susceptible d'être réduit en poudre, cette structure de monomère copolymérise de façon imparfaite avec le C₂F₂H₂.

Le copolymère durcissable selon l'invention contenant les restes de copolymérisation d'un monomère fluoré et d'un dérivé allylique est caractérisé en ce que :
a) les restes de monomère fluoré proviennent de l'association de C₂F₄ et de C₂H₂F₂.
b) le dérivé allylique est de formule : 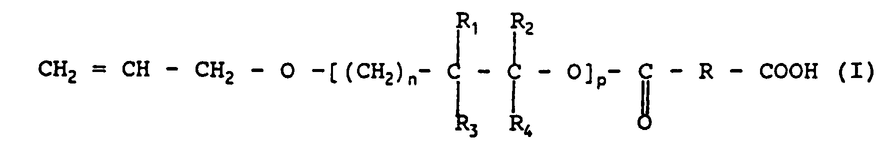
   R représentant une chaîne alkyle linéaire, ramifiée ou cyclique, ne comportant pas d'insaturation et possédant de 2 à 12 atomes de carbone.
   R₁, R₂, R₃, R₄ identiques ou différents étant choisis parmi H, CH₃, CH₂-CH₃, OH, CH₂-OH.
   n est 0 ou 1
   p est une valeur de 0 à 3
et c) se présentant sous forme de particules réductibles en poudre par broyage à température ambiante.

L'association pour 100 moles de l'ensemble des monomères fluorés de (a) est habituellement formée de
- 45 à 85 moles de C₂H₂F₂,
- 15 à 55 moles de C₂F₄

De préférence le copolymère durcissable fluoré selon l'invention est caractérisé en ce qu'il comprend les restes de monomères provenant de :
- 45 à 85 moles et mieux de 50 à 75 moles de C₂H₂F₂,
- 15 à 55 moles et mieux de 25 à 50 moles de C₂F₄,
- 3 à 20 moles et mieux de 4 à 10 moles du dérivé allylique (I) pour 100 moles de l'ensemble C₂H₂F₂-C₂F₄

Parmi les dérivés allyliques (I) préférés peuvent être cités les composés de formule :

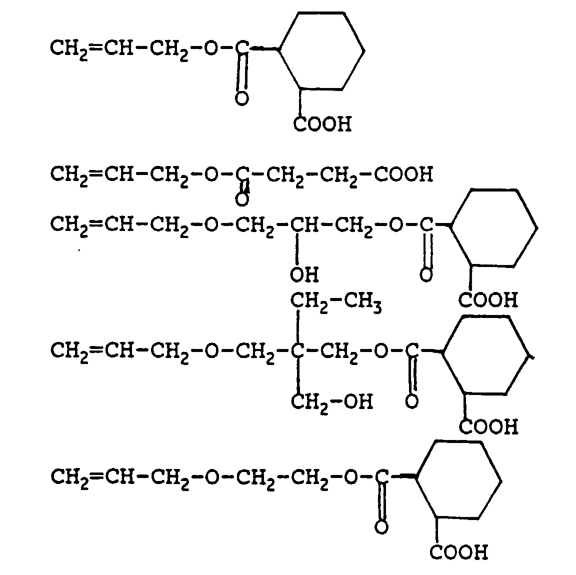

Ce copolymère durcissable est récupéré en fin de copolymérisation sous forme de particules dispersées qui sont facilement réductibles en poudre par broyage à température ambiante.

Ce copolymère durcissable peut éventuellement contenir les restes d'un ou plusieurs autres monomères susceptibles de copolymériser avec C₂H₂F₂ ou C₂F₄. Parmi ces monomères peuvent être cités C₂F₃Cl, C₃F₆, C₂F₃H (trifluoroéthylène), butylvinyléther, éthylvinyléther, isobutylvinyléther, ainsi que les composé de formule :

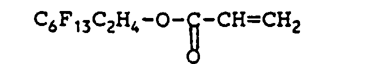

C₆F₁₃-C₂H₄-O-CH₂-CH=CH₂

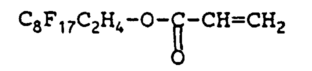

C₈F17C₂H₄-O-CH₂-CH=CH₂

Ces restes de monomère doivent cependant se trouver à des taux relativement faibles et ne doivent pas représenter plus de 5 motifs pour 100 motifs de la somme des motifs C₂H₂F₂-C₂F₄. Le fait d'avoir les restes d'un tel comonomère dans le copolymère durcissable a tendance à faire perdre les caractéristiques de broyage à température ambiante et à limiter la température de séchage du copolymère en fin de fabrication. Finalement, dans la mesure du possible, il n'est pas recommandé d'avoir les restes d'un tel comonomère dans le copolymère durcissable.

La masse moléculaire du copolymère durcissable mesurée par chromatographie d'exclusion stérique dans le tétrahydrofuranne à 20° C est habituellement comprise entre 2500 et 30000 exprimé en équivalent polystyrène et le plus souvent comprise entre 6000 et 15000.

Les copolymères fluorés durcissables connus ne semblent jamais avoir été obtenus sous forme dispersée. Les copolymères sont généralement préparés par polymérisation en solution et l'élimination directe du solvant de polymérisation ne conduit jamais à une dispersion, mais à la formation d'un magma plus ou moins caoutchouteux.

Un autre moyen connu de récupérer le copolymère en fin de polymérisation consiste à précipiter le milieu de polymérisation dans un milieu non solvant tel que l'eau. A ce stade il y a souvent réagglomération du copolymère, réagglomération qui apparaît toujours au séchage à des températures supérieures à 40° C. Cette réagglomération du produit sec entraîne, pour la mise sous forme de poudre, nécessairement un premier broyage. Ce broyage ne peut se faire à température ambiante pour plusieurs raisons. Une des raisons provient du produit lui-même qui se présente sous forme caoutchouteuse. Une autre raison est que la chaleur libérée par le broyage favorise la réagglomération des particules broyées. C'est pourquoi, pour éviter ces inconvénients, les mises sous forme de poudre des copolymères durcissables connus se font par broyage cryogénique à température inférieure à 0°C. De tels broyages restent encore grossiers et onéreux, et obligent à rebroyer une nouvelle fois les particules obtenues après les avoir mélangées avec les autres ingrédients pour peinture tels que pigment, charge, agent absorbant les ultra-violets et autres et après les avoir fait passer en extrudeuse pour homogénéiser l'ensemble.

L'avantage des copolymères durcissables selon l'invention, du fait de la présence du composé allylique comportant un motif 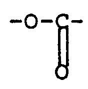 et une fonction carboxylique, est de les obtenir directement sous forme de particules, particules qui par ailleurs peuvent être directement broyées à température ambiante. Dans ces conditions il est possible, ou bien de réduire immédiatement en poudre le copolymère obtenu par un broyage classique peu onéreux à température ambiante et de simplement lui mélanger les autres ingrédients pour peintures avant emploi ou bien de mélanger aux particules de copolymère séchées les autres ingrédients pour peinture avant de broyer l'ensemble après passage en extrudeuse. Dans tous les cas le broyage cryogénique est évité et l'économie d'un broyage et/ou d'un passage en extrudeuse est faite.

Les copolymères durcissables selon l'invention présentent également l'avantage de ne pas se réagglomérer au séchage, ce qui permet de les sécher efficacement à des températures de 60 à 90° C pendant des durées supérieures à 10 heures sans problème.

Le dérivé allylique (I) est obtenu de façon classique par réaction sensiblement équimoléculaire d'un alcool allylique et d'un anhydride dicarboxylique à température d'environ 40-80° C en présence éventuellement de catalyseur, tel la triéthylamine. L'alcool allylique est choisi parmi les alcools de formule 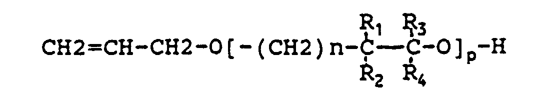 R1, R2,R3, R4, n et p étant tels que déjà définis
L'anhydride d'acide est choisi parmi les produits de formule : 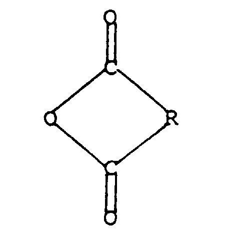 R étant tel que défini précédemment

Le copolymère durcissable est obtenu par tout procédé connu de polymérisation des monomères fluorés. Il est cependant principalement obtenu selon le procédé connu de polymérisation radicalaire en solution. Le procédé consiste à copolymériser, en milieu solvant organique l'ensemble des monomères en présence d'un initiateur organosoluble, à une température comprise entre environ 30 et 120° C, et de préférence entre 40 et 80° C, sous une pression d'environ 5 à 80 bars et de préférence entre 15 et 40 bars.

Le copolymère durcissable est obtenu par copolymérisation du C₂F₂H₂, du C₂F₄ et, du dérivé allylique (I) tel que défini précédemment. Pour 100 moles de monomères fluorés polymérisés sont utilisées :
- 45 à 85 moles et mieux 50 à 75 moles de C₂H₂F₂,
- 15 à 55 moles et mieux 25 à 50 moles de C₂F₄
auxquelles sont associées le dérivé allylique (I) tel que déjà défini.

Afin d'obtenir un copolymère durcissable possédant les meilleures propriétés, sont associées habituellement 3 à 20 moles et mieux 4 à 10 moles du dérivé allylique pour 100 moles de l'ensemble de deux monomères fluorés.

Selon un mode de copolymérisation préféré, le solvant est chauffé à la température de réaction choisie dans un réacteur agité préalablement dégazé. un mélange des différents monomères est initialement introduit dans le réacteur dans des conditions telles que la pression soit égale à la pression choisie. La composition de la charge initiale du réacteur dépend de la réactivité des différents comonomères et de la composition du copolymère recherché. Le rapport pondéral monomère/solvant est en général compris entre 0,05 et 1.

Lorsque la pression de réaction et la température de réaction sont atteintes l'initiateur de polymérisation est introduit dans le réacteur. La formation de polymère se traduit par une baisse de pression qui est compensée par l'ajout de mélange de monomères fluorés.

Il est possible d'ajouter un mélange de monomères fluorés de composition molaire identique à celle introduite initialement. Il est également possible de tenir compte des réactivités propres de chaque comonomère et ajuster la composition du mélange rajouté au cours de la polymérisation pour faire un copolymère de composition homogène.

Le dérivé allylique peut également être ajouté en cours de polymérisation. Le taux de ce dérivé ajouté, de préférence en continu, est en général supérieur au taux de dérivé allylique mis initialement pour tenir compte de la réactivité plus grande de ce dérivé.

Le dérivé allylique est de préférence ajouté de telle sorte que le rapport entre la vitesse d'introduction du dérivé allylique et la vitesse d'introduction des monomères fluorés reste constante pendant la durée de la polymérisation.

L'ajout du mélange de monomères pour maintenir la pression est poursuivi suffisamment longtemps pour atteindre un extrait sec de l'ordre de 10 à 60 %, de préférence de 15 à 40 %.

Les monomères volatiles peuvent être éliminés par dégazage. Après polymérisation, le copolymère est extrait du milieu réactionnel par précipitation dans un liquide non solvant du copolymère, mais miscible avec le solvant du milieu réactionnel. Le volume de liquide de précipitation représente généralement 1 à 10 fois le volume réactionnel. L'eau représente un excellent liquide non solvant du copolymère. Le milieu réactionnel est de préférence versé dans le liquide non solvant du copolymère sous agitation à température comprise entre l'ambiante et 70° C. Le copolymère récupéré par filtration se présente, contrairement aux autres produits solides connus du même type, non pas sous forme de masse, mais de particules dispersées facilement séchables à chaud sans agglomération. La répartition granulométrique des particules après séchage s'étend de quelques microns à quelques millimètres, et généralement de 50 microns à 4 millimètres.

Après filtration les particules sont séchées à une température pouvant atteindre 90° C.

Comme il est vu pour le produit, un monomère complémentaire tel que défini précédemment, autre qu'un de ceux indispensables à l'invention, peut être ajouté au milieu réactionnel. Ce monomère complémentaire peut être introduit à tout moment de la réaction de copolymérisation. En général, afin de conserver l'homogénéité de copolymère final, il est recommandé d'associer ce monomère en mélange aux autres monomères devant être introduits dans le milieu réactionnel. Ce monomère complémentaire ne doit pas représenter dans le mélange des monomères réactionnels plus de 5 moles pour 100 moles de la somme C₂H₂F₂-C₂F₄.

Le solvant choisi pour servir de milieu réactionnel ne doit de préférence pas avoir d'effet d'agent de transfert important afin d'éviter la réduction des masses moléculaires de façon trop importante. En outre il est préférable qu'il possède une solubilité dans le liquide non solvant du copolymère, utilisé ultérieurement, supérieure à 20 %, l'idéal étant que cette solubilité soit totale. Le solvant est de préférence choisi parmi les acétates et les alcools ou leurs mélanges, les cétones et les étheralcools. L'acétate d'éthyle, l'acétate de méthyle, l'acétate de butyle, l'acétonitrile, le méthanol et le tertiobutanol sont particulièrement retenus.

Les initiateurs de copolymérisation sont connus en eux-mêmes, les plus courants étant choisis parmi les initiateurs de polymérisation radicalaire comme les perdicarbonates de diisopropyle ou de dicyclohexyle, le perpivalate de tertiobutyle ou de tertioamyle, l'azobisisobutyronitrile et l'azo-bis-2, 2-diméthylvaléronitrile.

Le copolymère fluoré durcissable selon l'invention utilisé comme liant de peinture en poudre doit être associé à un durcisseur améliorant la réaction de durcissement par réticulation à chaud. Ce durcisseur peut être défini comme étant une résine porteuse de groupements fonctionnels réactionnels réactifs avec les groupes acide du copolymère durcissable. Parmi les durcisseurs possibles, on peut citer les résines porteuses de groupes époxy telles que le triglycidylisocyanurate, les résines de polyisocyanates libres ou bloqués telles que l'isophoronediisocyanate bloquée par le caprolactame, les résines d'hydroxyalkylamide telle que le bis-N,N-dihydroxyéthyl)adipamide.

Tout adjuvant ou additif habituel aux peintures en poudre peut être ajouté, que ce soient des pigments, des charges, des agents antipiqûres, des agents modifiants la rhéologie, des agents stabilisants, des antioxydants et autres.

La peinture en poudre peut être préparée par mélange à sec du copolymère fluoré durcissable avec les différentes autres constituants. Dans ce cas chacun des éléments peut être broyé séparément à la granulométrie désirée puis mélangé à sec.

Un autre mode de préparation préféré consiste à fondre et à mélanger dans une extrudeuse les différents constituants. La température dans l'extrudeuse est habituellement comprise entre 80 et 160° C. L'extrudât refroidi est granulé puis broyé à température ambiante.

La granulométrie de la peinture en poudre dépend du mode d'application choisi. A titre d'exemple, est choisie une granulométrie moyenne comprise entre 25 et 40 µ pour le pistoletage et une granulométrie moyenne de 70 à 120µ pour le trempage en bain fluidisé.

La peinture en poudre peut être appliquée par tout moyen susceptible d'assurer une répartition convenable des particules. En particulier peut être utilisé tout type de pistolet électrostatique dans lequel les particules chargées sont projetées sur un substrat possédant une charge contraire ou nulle. Il est également possible d'utiliser un bain fluidisé électrostatique ou non et de travailler par saupoudrage ou par rotomoulage.

La température de cuisson du revêtement dépend du mode d'application choisi et doit être suffisante pour assurer la coalescence des grains de poudre et la réaction de durcissement. A titre d'exemple, lorsque la peinture en poudre est projetée par pistoletage, le substrat revêtu est cuit à une température comprise entre 110 et 250° C.

La peinture en poudre peut être appliquée sur des métaux tels que l'acier, l'aluminium ou autres revêtus ou non de primaire.

Les primaires préférés sont à base de résines époxydes, epoxyphénoliques, (méth)acryliques, polyesters, polyester-polyuréthannes ou de combinaisons de ces résines. Leur épaisseur est comprise entre 2 et 30 microns. Il peuvent se présenter en poudre ou sous forme liquide.

A titre d'exemple d'un primaire en poudre, on peut citer la composition en poids obtenue en mélangeant :
- résine époxyde (équivalent époxyde 480 g/eq) : 92,08
- résine méthacrylique (dureté TUKON 15-16, Tv = 60°C) : 4,60
- dicyandiamide : 3,22
- alumine : 0,10

A titre d'exemple de primaire liquide, on peut citer la composition obtenue en mélangeant (en poids) :
- résine méthacrylique (Tv = 60° C ; dureté Tukon = 15-16) en solution dans le xylène (concentration : 40 % en poids) : 11,26
- résine époxyde (masse moléculaire = 2900 ; poids d'équivalent époxy : 1500 à 2000) en solution dans l'acétate d'éthoxy-2 éthyle (concentration : 50 % en poids) : 22,74
- résine époxyde (masse moléculaire = 380 ; poids d'équivalent époxy : 180-200) : 3,04
- résine phénolique éthérifiée (indice d'acide 55 meq KOH/mg ; viscosité dynamique : 0,25 à 0,5 Pa.s) : 2,20
- composés isocyanates (isocyanates aliphatiques bloqués à teneur en -N=C=O égale à 11,5 % ; viscosité dynamique comprise entre 7 et 13 Pa.s) : 1,11
- dioxyde de titane : 22,30
- chromate de strontium : 2,21
- silice : 0,22
- acétate d'éthoxy-2 éthyle : 13,53
- xylène : 7,13
- acétate de butyle : 14,26

Pour juger du degré de réticulation du film, il est soumis à une série de frottements avec un coton imbibé de méthylétylcétone (MEC) jusqu'à apparition du support.

Un nombre d'aller-retours inférieur à 50 traduit un mauvaise réticulation, un nombre d'aller-retours supérieur à 100 traduit une excellente réticulation.

Les exemples suivants illustrent l'invention sans toutefois la limiter.

### EXEMPLE 1 (Comparatif)

Dans un autoclave de 3,3 l muni d'une agitation sont introduits après dégazage sous vide 1,9 1. d'acétate d'éthyle, 6,5 g d'acide méthacrylique, 390 g de C₂H₂F₂ et, 330 g de C₂F₄.

L'autoclave est ensuite chauffé à 70° C et sont introduits 5 g de perpivalate de tertiobutyle.

Aucune baisse de pression ne se produit, il ne se forme pas de copolymère contenant du fluor.

### EXEMPLE 2 (Comparatif)

Dans un autoclave de 3,3 l. muni d'une agitation, sont introduits après dégazage sous vide : 2 1. d'acide acétique, 10 g d'acide allyloxyacétique, 215 g de C₂H₂F₂ et 84 g de C₂F₄. La température est portée à 70° C et la pression est de 19 bars. Sont ensuite introduits : 15 g de perpivalate de tertiobutyle pour initier la réaction. Il se produit une baisse de pression qui est compensée par l'ajout de mélange C₂H₂F₂/C₂F₄ dans le rapport molaire 65/35. Chaque fois que sont introduits 44 g de ce mélange, sont introduits 6,75 g d'acide allyloxyacétique. Après 2 h 15 de polymérisation ont ainsi été introduits 20,25 g d'acide allyloxyacétique et 177 g du mélange C₂H₂F₂/C2F4 à 65/35 molaire.

Après dégazage l'autoclave est vidangé et le copolymère est précipité dans un volume de 10 l d'eau.

Le copolymère s'agglomère au séchage à 70° C.

Sont récupérés 244 g de copolymère de masse moléculaire Mn = 2600 et possédant 0,73 10⁻³ équivalent COOH par gramme de produit

Le copolymère n'est pas broyable à température ambiante.

### EXEMPLE 3 (Comparatif)

Dans un autoclave de 3,3 l. muni d'une agitation sont introduits après dégazage 2 1. de tertiobutanol, 40 g du composé de formule : 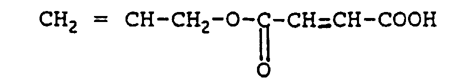 puis 215 g de C₂H₂F₂ et 84 g de C₂F₄

L'autoclave est ensuite chauffé à 70° C, la pression résultante est de 17 bars.

Sont ensuite introduits 10 g de perpivalate de tertiobutyle.

Aucune baisse de pression ne se produit, il ne se forme pas de polymère.

### EXEMPLE 4 (Comparatif)

Dans un autoclave de 3,3 l. muni d'une agitation sont introduits après dégazage, 2 1. de tertiobutanol, 73 g du composé de formule : 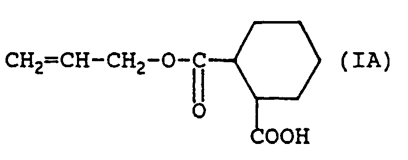 276 g de butylvinyléther et 360 g de C₂F₃Cl.

Après avoir chauffé l'autoclave à 70° C sont introduits 10 g de perpivalate de tertiobutyle pour initier la polymérisation.

La pression initiale est de 2,8 bars. Après 1h 45 de copolymérisation la pression est de 1,2 bars.

L'autoclave est dégazé, 2135 g de solution sont récupérés.

Cette solution est versée dans 10 l. d'eau sous agitation. Le copolymère est très difficile à filtrer et, s'agglomère totalement lors du séchage à 70° C ; il n'est pas broyable à température ambiante et se présente sous aspect chewing-gum.

L'analyse du copolymère formé donne un composition molaire :
C₂F₃Cl: 52
butylvinyléther : 48
IA : 8,7

### EXEMPLE 5

Dans un autoclave de 3,3 l. muni d'une agitation sont introduits après dégazage sous vide 2,25 l. de tertiobutanol, 13,5 g du composé de formule 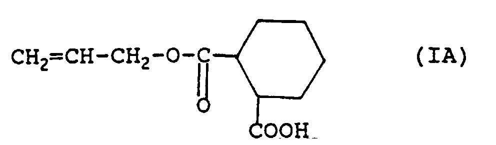 puis 215 g de C₂H₂F₂ et 84 g de C₂F₄

L'autoclave est chauffé à 50° C et la pression résultante est de 14 bars. Sont introduits ensuite 10 g d'un solution à 33 % de peroxydicarbonate d'isopropyle dans l'acétate d'éthyle. La pression est maintenue à 14 bars par introduction d'un mélange C₂H₂F₂-C₂F₄, de composition molaire 65/35. Chaque fois que sont introduits 44 g de mélange C₂F₂H₂ -C₂F₄ 65/35, sont introduits 6,6 g du composé de formule (IA). Pour maintenir la cinétique de copolymérisation sont introduits chaque heure 5 g de la solution de peroxydicarbonate d'isopropyle (IPP).

Après 5 h 40 ont ainsi été introduits :
- 59,4 g du composé de formule (IA)
- 20 g de solution d'IPP
- 443 g de mélange C₂H₂F₂-C₂F₄ à 65/35 molaire.

L'autoclave est refroidi et dégazé.

Le produit de la copolymérisation est versé sous agitation dans un volume de 10 l d'eau. L'agitation est maintenue pendant 3 h puis le copolymère précipité est filtré sur un filtre standard.

Le copolymère est séché en étuve pendant 14 h à 70° C.

Sont récupérés après séchage 487 g d'une poudre de granulométrie grossière dont la taille des particules s'échelonne de 200 µ à 3 mm.

Les masses moléculaires du copolymère sont mesurées par chromatographie d'exclusion stérique dans le taétrahydrofurane à 20° C.

Le chromatographe est équipé de deux colonnes 10⁴ et 10⁵ nm (nanomètre) et d'un détecteur réfractométrique.

Mn = 7800 exprimé en équivalent polystyrène.

Le taux de fonction carboxylique est de 0,67.10⁻³ équivalent par gramme de copolymère.

L'analyse RMN F¹⁹ et H du copolymère montre qu'il ne reste pas d'insaturation résiduaire et que le taux de C₂H₂F₂-C₂F₄ est de 65/35.

La composition molaire globale du copolymère est C₂H₂F₂/C₂F₄/IA : 65/35/6.

### EXEMPLE 6

Dans un autoclave de 3,3 l. muni d'une agitation, sont introduits après dégazage sous vide 2 l. d'acétate de méthyle, 10,65 g du composé de formule 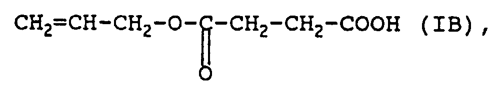 215 g de C₂H₂F₂ puis 84 g de C₂F₄

L'autoclave est chauffé à 50° C et la pression résultante est de 10 bars. Sont introduits 10 g d'une solution à 33 % de perdicarbonate d'isopropyle dans l'acétate d'éthyle.

La pression est maintenue à 10 bars par introduction d'un mélange C₂H₂F₂-C₂F₄ de composition molaire 65/35. Chaque fois que sont introduits 22 g de mélange C₂F₂H₂-C₂F₄ 65/35, sont introduits 2,46 g du composé de formule (IB). Pour maintenir la cinétique de copolymérisation sont introduits après 1 h30 6 g de la solution de péroxydicarbonate d'isopropyle (IPP).

Après 5 h 40 ont ainsi été introduits en cours de réaction :
- 46,7 g du composé de formule (IB),
- 6 g de solution d'IPP,
- 420 g de mélange C₂H₂F₂/C₂F₄ 65/35 molaire.

L'autoclave est refroidi et dégazé.

Le produit de la copolymérisation est versé sous agitation dans un volume de 10 l d'eau. L'agitation est maintenue pendant 3 h. Le copolymère précipité est ensuite filtré sur un filtre standard.

Le copolymère est séché en étuve pendant 14 h à 70° C. On récupère après séchage 500 g d'une poudre de granulométrie grossière dont la taille des particules s'échelonne de 200 µ à 3 mm.

En outre le copolymère possède les caractéristiques suivantes :
Mn = 10 000
COOH = 0,68.10⁻³ équivalent/gramme
C₂H₂F₂/C₂F₄/(IB) = 65/35/5,9 molaire

### EXEMPLE 7

Dans un autoclave de 3,3 l muni d'une agitation, sont introduits après dégazage sous vide 2 l de tertiobutanol, 40 g du composé de formule : 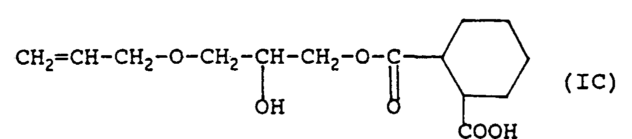 215 g de C₂H₂F₂, puis 84 g de C₂F₄

L'autoclave est chauffé à 70° C, la pression résultante est de 18,5 bars. Ont introduits ensuite 10 g de perpivalate de tertiobutyle pour initier la réaction.

La pression est maintenue à 18,5 bars par introduction d'un mélange C₂H₂F₂-C₂F₄ de composition molaire 65/35.

Chaque fois que sont introduits 44 g de mélange C₂H₂F₂-C₂F₄ 65/35, sont introduits 7,5 g du composé de formule (IC). Pour maintenir la cinétique de copolymérisation sont introduits après 1 h 30 et 3 h de réaction, 5 g de perpivalate de tertiobutyle.

Après 4 h 30 ont ainsi été introduits :
- 67,5 g du composé de formule (IC),
- 10 g de perpivalate de tertiobutyle,
- 442 g de mélange C₂H₂F₂-C₂F₄ 65/35

L'autoclave est refroidi et dégazé.

Le produit de la copolymérisation est versé sous agitation dans un volume de 10 l d'eau. L'agitation est maintenue pendant 3 h puis le copolymère précipité est filtré.

Le copolymère est séché en étuve 14 h à 70° C. Sont récupérés après séchage 497 g d'une poudre de granulométrie grossière dont la taille des particules est comprise entre 200 µ et 3 mm.

Le copolymère possède en outre les caractéristiques suivantes :
Mn = 2700
COOH = 0,59. 10⁻³ équivalent par gramme

La composition molaire est de C₂F₂H₂/C₂F₄/(IC) = 65/35/5,5

### EXEMPLE 8

Dans un autoclave de 3,3 l muni d'une agitation, sont introduits après dégazage sous vide 1,9 l de tertiobutanol, 50 g du composé de formule : 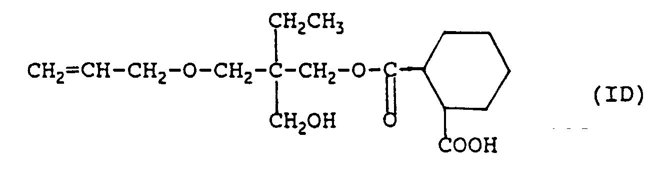 215 g de C₂H₂F₂ puis 84 g de C₂F₄.

L'autoclave est chauffé à 70° C, la pression résultante est de 20 bars. Sont ensuite introduits 10 g de perpivalate de tertiobutyle.

La pression est maintenue à 20 bars par introduction d'un mélange C₂H₂F₂-C₂F₄ de composition molaire 65/35.

Chaque fois que sont introduits 44 g de mélange C₂H₂F₂-C₂F₄ 65/35, sont introduits 9,37 g du composé de formule (ID). Pour maintenir la cinétique de copolymérisation sont introduits chaque heure 4 g de perpivalate de tertiobutyle.

Après 6 h 30 ont ainsi été introduits :
- 46, 9 g du composé de formule (ID),
- 20 g de perpivalate de tertiobutyle,
- 265 g de mélange C₂H₂F₂-C₂F₄ 65/35 molaire.

L'autoclave est refroidi et dégagé.

Le produit de la copolymérisation est versé sous agitation dans un volume de 10 l d'eau. L'agitation est maintenue pendant 3 h puis le copolymère précipité est filtré.

Le copolymère est séché en étuve pendant 14 h à 70° C. Sont récupérés après séchage 381 g de copolymère dont la taille des particules est comprise entre 200 µ et 3 mm.

Le copolymère possède en outre les caractéristiques suivantes :
Mn = 4300
COOH = 0,57.10⁻³ équivalent par gramme.

La composition molaire est :
C₂H₂F₂/C₂F₄/(ID) = 65/35/5,4

### EXEMPLE 9

Dans un autoclave de 3,3 l muni d'une agitation, sont introduits après dégazage sous vide 2,1 l de tertiobutanol, 13,5 g du composé de formule 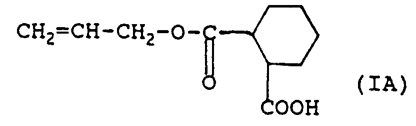 215 g de C₂H₂F₂, 84 g de C₂F₄ puis 20 g de C₃F₆

L'autoclave est chauffé à 50° C et la pression résultante est de 15 bars. Sont introduits ensuite 10 g d'une solution à 33 % de peroxydicarbonate d'isopropyle dans l'acétate d'éthyle.

La pression est maintenue à 15 bars par introduction d'un mélange C₂H₂F₂-C₂F₄ de composition molaire 65/35. Chaque fois que l'on a introduit 44 g de mélange C₂H₂F₂-C₂F4 65/35 sont introduits 6,6 g du composé de formule (IA). Pour maintenir la cinétique de copolymérisation sont introduits chaque heure 5 g de la solution de peroxydicarbonate d'isopropyle (IPP).

Après 5 h 30 on ainsi été introduits :
- 59,4 g du composé de formule (IA),
- 20 g de solution d'IPP,
- 443 g de mélange C₂H₂F₂-C₂F₄ 65/35 molaire.

L'autoclave est refroidi et dégazé.

Le produit de la copolymérisation est versé sous agitation dans un volume de 10 l d'eau. L'agitation est maintenue pendant 3 h, le copolymère précipité est filtré.

Le copolymère est séché à l'étuve pendant 14 h à 70° C. Sont récupérés après séchage 497 g d'une poudre de granulométrie grossière dont la taille des particules est comprise entre 500 µ et 3 mm.

Le copolymère possède en outre les caractéristiques suivantes :
Mn = 8000
COOH = 0,66.10⁻³ équivalent par gramme.

La composante molaire est
C₂H₂F₂/C₂F₄/C₃F₆/(IA) = 64/34/2/6

### EXEMPLE 10 (Comparatif)

Dans un autoclave de 3,3 l muni d'une agitation on introduit après dégazage sous vide 2 l de tertiobutanol et 30 g de 1.2 allyloxypropanediol, 215 g de C₂F₂H₂, 84 g de C₂F₄. La température est portée à 70° C et la pression monte à 20 bars.

Après introduction de 5 g de perpivalate de tertiobutyle pour initier la polymérisation, il se produit une baisse de pression que l'on compense par l'ajout d'un mélange de C₂F₂H₂/C₂F₄ dans la proportion molaire 65/35. Chaque fois que l'on a introduit 89 g de mélange de C₂F₂H₂/C₂F₄ 65/35, on introduit également 11 g de 1.2 allyloxypropanediol.

Après 1 h 30 de polymérisation on introduit 2,5 g de perpivalate de tertiobutyle pour accélérer la cinétique de polymérisation.

Après 4 h30 de polymérisation on a ainsi introduit 445 g de mélange C₂F₂H₂/C₂F₄ 65/35 molaire et 44 g d'1.2 allyloxy-propanediol.

La température est abaissée et le réacteur est dégazé. Le produit de copolymérisation est précipité dans un volume de 10 l d'eau, et récupéré par filtration. Il est impératif de sécher ce copolymère à une température inférieure à 35° C, une agglomération se produit lorsque le séchage se fait à température plus élevée.

A une température de 35° C sous un vide de 65 mbar le séchage prend plusieurs jours. Il est donc très pénalisant de récupérer ce copolymère sous forme divisée.

On récupère après séchage à 30° C 465 g d'un copolymère de caractéristique suivante :
Mn = 9000
OH = 1,6. 10⁻³ équivalent par gramme de copolymère.

La composante molaire est :
C₂F₂H₂/C₂F₄/allyloxypropanediol = 65/35/6,9

Le copolymère ne peut être broyé que dans un broyeur cryogénique à basse température.

### EXEMPLE 11 (Comparatif)

Dans un autoclave de 3,3 l muni d'une agitation on introduit après dégazage sous vide 2 l de tertiobutanol, 20 g de 1.2 allyloxypropanediol, 8 g de composé de formule IA 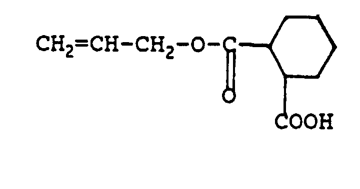 puis 215 g de C₂F₂H₂ et 84 g de C₂F₄. La température est portée à 70° C et la pression atteind 17 bars.
Après introduction de 10 g de perpivalate de tertiobutyle pour initier la polymérisation, il se produit une baisse de pression que l'on compense par l'ajout d'un mélange C₂F₂H₂/C₂F₄ 65/35.

Chaque fois que l'on introduit 22 g de mélange C₂F₂H₂/C₂F₄ 65/35 pour maintenir la pression, on introduit 4,5 g d'1.2 allyloxypropanediol et 1,5 g du composé IA.

Après 6 h30 de réaction on a introduit 445 g de mélange C₂F₂H₂/C₂F₄ 65/35, 85,5 g d'allyloxypropanediol et 28,5 g de composé de formule IA. Pour accélérer la vitesse de polymérisation on introduit en cours de polymérisation 10 g de perpivalate de tertiobutyle.

La température est ensuite abaissée et le réacteur dégazé.

Le produit de copolymérisation est précipité dans un volume de 10 l d'eau et récupéré par filtration.

Il est impossible d'obtenir ce copolymère sous forme divisé après séchage à 70° C. Le copolymère est totalement fondu, et se comporte comme un liquide visqueux à une température de 70° C.

Après séchage sont récupérés 500 g de copolymère de caractéristique :
Mn = 6000
OH = 1,7.10⁻³ équivalent par gramme
COOH = 0,31.10⁻³ équivalent par gramme.

La composante molaire du copolymère est :
C₂F₂H₂/C₂F₄/allyloxypropanediol/composé IA = 65/35/7,9/2,9

Le copolymère ne peut être broyé à température ambiante.

### EXEMPLE 12

Le copolymère de l'exemple 5 est broyé à température ambiante au moyen d'un broyeur PALLMAN PPL18® pour donner une poudre de granulométrie moyenne 35 microns.

Le triglycidylisocyanurate (TGIC) est broyé séparément de la même façon pour donner une poudre de granulométrie moyenne 35 microns.

La peinture poudre est préparée en mélangeant :
- 300 g du copolymère broyé de l'exemple 5,
- 21 g de TGIC broyé,
- 0,35 g d'alumine,
- 32,1 g d'oxyde de chrome vert GX
pendant 90 s à 1000 tours/min.

Le mélange résultant est tamisé pour éliminer les particules supérieures à 280 microns.

La poudre est appliquée sur une plaque d'aluminium chromaté d'épaisseur 0,7 mm au moyen d'un pistolet électrostatique RANSBURG GEMA PGC1®.

La tension d'application est de -50 KV, la pression d'air de 2 kg/cm², le débit d'air de 6 m3/h.

La plaquette est étuvée pendant 12 minutes à 200° C puis refroidie à température ambiante pour donner un film d'épaisseur 65 microns.

La dureté Persoz mesurée selon NFT 30-016 est de 160 s.

Le brillant spéculaire à 60° mesuré selon ASTM D 523-85 est de 35 %.

La résistance à la méthyléthylcétone est supérieure à 100 aller-retours.

L'adhérence évaluée selon NFT 30-038 est de classe 0.

### EXEMPLE 13

On introduit successivement dans un mélangeur HENSCHELL®:
- 6000 g du copolymère de l'exemple 5,
- 420 g de TGIC,
- 7 g d'alumine,
- 642 g d'oxyde de chrome vert GX
que l'on prémélange grossièrement pendant 90 s à 830 tours minute.

Ce prémélange alimente une extrudeuse Clextral bi-vis BC 21® équipée d'éléments malaxeurs. La vitesse de rotation est de 400 tours/minute. La température du fourreau est de 100° C. La température de la filière est de 120° C.

L'extrudât est refroidi par immersion dans l'eau à 20° C, puis granulé sur LANCELIN®.

Les granulés sont broyés à température ambiante au moyen d'un broyeur PALLMAN PPL18® pour donner une poudre de granulométrie moyenne 35 microns.

La poudre résultante est tamisée pour éliminer les particules supérieures à 280 microns.

La poudre est appliquée sur une plaque d'aluminium chromaté d'épaisseur 0,7 mm au moyen d'un pistolet électrostatique RANSBURG GEMA PGC1®.

La tension d'application est de -50 KV, la pression d'air de 2 kg/cm², le débit d'air de 6 m3/h

La plaquette est étuvée pendant 10 minutes à 200° C puis refroidie à température ambiante pour donner un film d'épaisseur 65 microns.

La dureté Persoz mesurée selon NFT 30-016 est de 160 s.

Le brillant spéculaire à 60° mesuré selon ASTM D 523-85 est de 35 %.

La résistance à la méthyléthylcétone est supérieure à 100 aller-retours.

L'adhérence évaluée selon NFT 30-038 est de classe 0.

### EXEMPLE 14

Le copolymère de l'exemple 5 est broyé à température ambiante au moyen d'un broyeur PALLMAN PPL18® pour donner une poudre de granulométrie moyenne 35 microns.

Le bis(N,N-dihydroxyethyl)adipamide(HEA) est broyé séparément de la même façon pour donner une poudre de granulométrie moyenne 35 microns.

La peinture poudre est préparée en mélangeant :
- 300 g du copolymère broyé de l'exemple 1,
- 15,8 g de HEA broyé,
- 0,35 g d'alumine,
- 31,5 g d'oxyde de chrome vert GX
pendant 90 s à 1000 tours/minute.

Le mélange résultant est tamisé pour éliminer les particules supérieures à 280 microns.

La poudre est appliquée sur une plaque d'aluminium chromaté d'épaisseur 0,7 mm au moyen d'un pistolet électrostatique RANSBURG GEMA PGC1®.

La tension d'application est de -50 KV, la pression d'air de 2 kg/cm², le débit d'air de 6 m3/h.

La plaquette est étuvée pendant 25 minutes à 150° C puis refroidie à température ambiante pour donner un film d'épaisseur 70 microns.

La dureté Persoz mesurée selon NFT 30-016 est de 165 s.

Le brillant spéculaire à 60° mesuré selon ASTM D 523-85 est de 38 %.

La résistance à la méthyléthylcétone est supérieure à 100 aller-retours.

L'adhérence évaluée selon NFT 30-038 est de classe 0.

### EXEMPLE 15

Le copolymère de l'exemple 6 est broyé à température ambiante au moyen d'un broyeur PALLMAN PPL18® pour donner une poudre de granulométrie moyenne 35 microns.

Le triglycidylisocyanurate (TGIC) est broyé séparément de la même façon pour donner une poudre de granulométrie moyenne 35 microns.

La peinture poudre est préparée en mélangeant :
- 300 g du copolymère broyé de l'exemple 6,
- 21 g de TGIC broyé,
- 0,35 g d'alumine,
- 32,1 g d'oxyde de chrome vert GX
pendant 90 s à 1000 tours/minute.

Le mélange résultant est tamisé pour éliminer les particules supérieures à 280 microns.

La poudre est appliquée sur une plaque d'acier galvanisé d'épaisseur 0,8 mm préalablement revêtue de 8µm d'un primaire à base d'époxy tel que précédemment défini au moyen d'un pistolet électrostatique RANSBURG GEMA PGC1®.

La tension d'application est de -50 KV, la pression d'air de 2 kg/cm², le débit d'air de 6 m3/h.

La plaquette est étuvée pendant 12 minutes à 200° C puis refroidie à température ambiante pour donner un film d'épaisseur 65 microns.

La dureté Persoz mesurée selon NFT 30-016 est de 185 s.

Le brillant spéculaire à 60° mesuré selon ASTM D 523-85 est de 40 %.

La résistance à la méthyléthylcétone est supérieure à 100 aller-retours.

L'adhérence évaluée selon NFT 30-038 est de classe 0.

### EXEMPLE 16

Le copolymère de l'exemple 7 est broyé à température ambiante au moyen d'un broyeur PALLMAN PPL18® pour donner une poudre de granulométrie moyenne 27 microns.

Le triglycidylisocyanurate (TGIC) est broyé séparément de la même façon pour donner une poudre de granulométrie moyenne 35 microns.

La peinture poudre est préparée en mélangeant :
- 300 g du copolymère broyé de l'exemple 7,
- 18,6 g de TGIC broyé,
- 0,35 g d'alumine,
- 31,8 g d'oxyde de chrome vert GX
pendant 90 s à 1000 tours/minute.

Le mélange résultant est tamisé pour éliminer les particules supérieures à 280 microns.

La poudre est appliquée sur une plaque d'aluminium chromaté d'épaisseur 0,7 mm au moyen d'un pistolet électrostatique RANSBURG GEMA PGC1®.

La tension d'application est de -50 KV, la pression d'air de 2 kg/cm², le débit d'air de 6 m3/h.

La plaquette est étuvée pendant 15 minutes à 200° C puis refroidie à température ambiante pour donner un film d'épaisseur 58 microns.

La dureté Persoz mesurée selon NFT 30-016 est de 140 s.

Le brillant spéculaire à 60° mesuré selon ASTM D 523-85 est de 20 %.

La résistance à la méthyléthylcétone est supérieure à 100 aller-retours.

L'adhérence évaluée selon NFT 30-038 est de classe 0.

### EXEMPLE 17

Le copolymère de l'exemple 8 est broyé à température ambiante au moyen d'un broyeur PALLMAN PPL18® pour donner une poudre de granulométrie moyenne 30 microns.

Le triglycidylisocyanurate (TGIC) est broyé séparément de la même façon pour donner une poudre de granulométrie moyenne 35 microns.

La peinture poudre est préparée en mélangeant :
- 300 g du copolymère broyé de l'exemple 8,
- 18 g de TGIC broyé,
- 0,35 g d'alumine,
- 31,8 g d'oxyde de chrome vert GX
pendant 90 s à 1000 tours/minute.

Le mélange résultant est tamisé pour éliminer les particules supérieures à 280 microns.

La poudre est appliquée sur une plaque d'aluminium chromaté d'épaisseur 0,7 mm au moyen d'un pistolet électrostatique RANSBURG GEMA PGC1®.

La tension d'application est de -50 KV, la pression d'air de 2 kg/cm², le débit d'air de 6 m3/h.

La plaquette est étuvée pendant 15 minutes à 200° C puis refroidie à température ambiante pour donner un film d'épaisseur 60 microns.

La dureté Persoz mesurée selon NFT 30-016 est de 150 s.

Le brillant spéculaire à 60° mesuré selon ASTM D 523-85 est de 25 %.

La résistance à la méthyléthylcétone est supérieure à 100 aller-retours.

L'adhérence évaluée selon NFT 30-038 est de classe 0.

### EXEMPLE 18

On introduit successivement dans un mélangeur HENSCHELL®:
- 6000 g du copolymère de l'exemple 9,
- 414 g de TGIC,
- 7 g d'alumine,
- 642 g d'oxyde de chrome vert GX
que l'on prémélange grossièrement pendant 90 s à 830 tours/minutes.

Ce prémélange alimente une extrudeuse Clextral bi-vis BC 21® équipée d'éléments malaxeurs. La vitesse de rotation est de 400 tours/minute. La température du fourreau est de 100° C. La température de la filière est de 120° C.

L'extrudât est refroidi par immersion dans l'eau à 20° C, puis granulé sur LANCELIN®.

Les granulés sont broyés à température ambiante au moyen d'un broyeur PALLMAN PPL18® pour donner une poudre de granulométrie moyenne 35 microns.

La poudre est appliquée sur une plaque d'aluminium chromaté d'épaisseur 0,7 mm au moyen d'un pistolet électrostatique RANSBURG GEMA PGC1®.

La tension d'application est de -50 KV, la pression d'air de 2 kg/cm², le débit d'air de 6 m3/h.

La plaquette est étuvée pendant 12 minutes à 200° C puis refroidie à température ambiante pour donner un film d'épaisseur 65 microns.

La dureté Persoz mesurée selon NFT 30-016 est de 190 s.

Le brillant spéculaire à 60° mesuré selon ASTM D 523-85 est de 33 %.

La résistance à la méthyléthylcétone est supérieure à 100 aller-retours.

L'adhérence évaluée selon NFT 30-038 est de classe 0.

## Revendications

1. Copolymère durcissable contenant les restes de copolymérisation d'un monomère fluoré et d'un dérivé allylique caractérisé en ce que :
a) les restes de monomère fluoré proviennent de l'association de tétrafluoroéthylène et de fluorure de vinylidène.
b) le dérivé allylique est de formule : 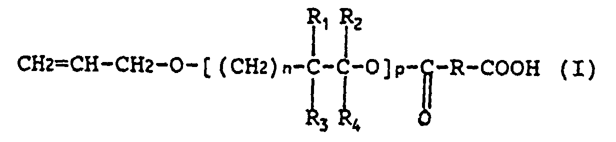
R représentant une chaîne alkyle linéaire, ramifiée, ou cyclique, ne comportant pas d'insaturation et possédant de 2 à 12 atomes de carbone.
R₁,R₂,R₃,R₄ identiques ou différents étant choisis parmi : H, CH₃, CH₂-CH₃, OH, CH₂OH
n est 0 ou 1
p est une valeur de 0 à 3
et c) se présentant sous forme de particules réductibles en poudre par broyage à température ambiante.

2. Copolymère durcissable selon la revendication 1 caractérisé en ce que l'association pour 100 moles de monomères fluorés est constituée de :
- 45 à 85 moles de fluorure de vinylidène,
- 15 à 55 moles de tétrafluoroéthylène.

3. Copolymère durcissable selon l'une des revendications 1 ou 2 caractérisé en ce qu'il comprend les restes des monomères provenant de :
- 45 à 85 moles de fluorure de vinylidène,
- 15 à 55 moles de tétrafluoroéthylène,
- 3 à 20 moles du dérivé allylique (I) pour 100 moles de l'ensemble fluorure de vinylidène-tétrafluoroéthylène.

4. Copolymère selon l'une des revendications 1 à 3 caractérisé en ce que sa masse moléculaire est comprise entre 2500 et 30000.

5. Procédé de fabrication de copolymère durcissable à base de monomère fluoré et de dérivé allylique caractérisé en ce que sont copolymérisés :
- du fluorure de vinylidène,
- du tétrafluoroéthylène et,
- un dérivé allylique tel que défini dans la revendication 1.

6. Procédé selon la revendication 5 caractérisé en ce que pour 100 moles de monomères fluorés :
- 45 à 85 moles représentent le fluorure de vinylidène,
- 15 à 55 moles représentent le tétrafluoroéthylène.

7. Procédé selon l'une des revendications 5 ou 6 caractérisé en ce que pour 100 moles de l'ensemble des monomères fluorés sont utilisés :
- 45 à 85 moles de fluorure de vinylidène pour
- 15 à 55 moles de tétrafluoroéthylène,
- 3 à 20 moles du dérivé allylique tel que défini dans la revendication 1.

8. Procédé selon l'une des revendication 5 à 7 caractérisé en ce que la copolymérisation s'effectue en solution dans un solvant organique.

9. Procédé selon l'une des revendications 5 à 8 caractérisé en ce que la température de copolymérisation est comprise entre 30 et 120° C.

10. Procédé selon l'une des revendications 5 à 9 caractérisé en ce que la pression de copolymérisation est comprise entre 5 et 80 bars.

11. Procédé selon l'une des revendications 5 à 10 caractérisé en ce que le copolymère est extrait du milieu réactionnel par précipitation dans un liquide non solvant du copolymère mais miscible au solvant du milieu réactionnel.

12. Procédé selon la revendication 11 caractérisé en ce que le liquide non solvant est l'eau.

13. Procédé selon l'une des revendication 5 à 12 caractérisé en ce qu'après séchage le le copolymère se présente sous forme de particules dispersées.

14. Procédé selon la revendication 13 caractérisé en ce que les particules possèdent une répartition granulométrique comprise de quelques microns à quelques millimètres.

15. Procédé selon l'une des revendications 13 ou 14 caractérisé en ce que la taille des particules est comprise entre 50 microns et 4 millimètres.

16. Peinture en poudre obtenue à partir des copolymères des revendications 1 à 4.

## Patentansprüche

1. Härtbares Copolymer, enthaltend Reste aus der Copolymerisation eines fluorierten Monomers und eines Allylderivates, dadurch gekennzeichnet, daß
a) die Reste des fluorierten Monomers aus der Verbindung von Tetrafluorethylen und Vinylidenfluorid stammen;
b) das Allylderivat der Formel 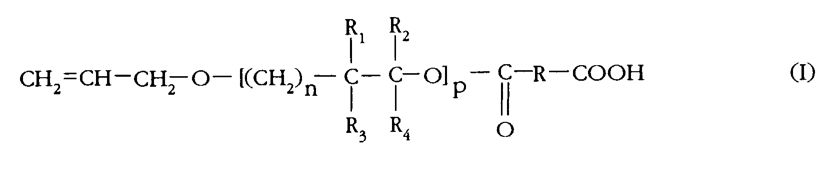 in Form von Teilchen vorliegt, die durch Vermahlen bei Raumtemperatur zu einem Pulver zerkleinert werden können,
wobei
R eine lineare, verzweigte oder ringförmige Alkylkette darstellt, die keine ungesättigten Bindungen enthält und 2 bis 12 Kohlenstoffatome besitzt;
R₁, R₂, R₃ und R₄, identisch oder verschieden, ausgewählt sind aus H, CH₃, CH₂-CH₃, OH, CH₂OH;
n gleich 0 oder 1 ist;
p einen Wert von 0 bis 3 annimmt.

2. Härtbares Copolymer nach Anspruch 1, dadurch gekennzeichnet, daß die Verbindung, berechnet auf 100 mol der fluorierten Monomere, aus
- 45 bis 85 mol Vinylidenfluorid,
- 15 bis 55 mol Tetrafluorethylen
besteht.

3. Härtbares Copolymer nach Anspruch 1 oder 2, dadurch gekennzeichnet, daß es Reste von Monomeren umfaßt, stammend aus:
- 45 bis 85 mol Vinylidenfluorid,
- 15 bis 55 mol Tetrafluorethylen,
- 3 bis 20 mol des Allylderivates (I), berechnet auf 100 mol des gesamten Vinyliden-tetrafluorethylenfluorids.

4. Copolymer nach einem der Ansprüche 1 bis 3, dadurch gekennzeichnet, daß seine Molekularmasse 2.500 bis 30.000 beträgt.

5. Verfahren zur Herstellung eines härtbaren Copolymers auf Basis eines fluorierten Monomers und eines Allylderivates, dadurch gekennzeichnet, daß
- Vinylidenfluorid,
- Tetrafluorethylen und
- ein Allylderivat, definiert wie in Anspruch 1,
copolymerisiert werden.

6. Verfahren nach Anspruch 5, dadurch gekennzeichnet, daß auf 100 mol der fluorierten Monomere
- 45 bis 85 mol Vinylidenfluorid darstellen,
- 15 bis 55 mol Tetrafluorethylen darstellen.

7. Verfahren nach Anspruch 5 oder 6, dadurch gekennzeichnet, daß auf 100 mol der Gesamtheit der fluorierten Monomere
- 45 bis 85 mol Vinylidenfluorid auf
- 15 bis 55 mol Tetrafluorethylen,
- 3 bis 20 mol des Allylderivates, definiert wie in Anspruch 1,
verwendet werden.

8. Verfahren nach einem der Ansprüche 5 bis 7, dadurch gekennzeichnet, daß die Copolymerisation in Lösung in einem organischen Lösemittel durchgeführt wird.

9. Verfahren nach einem der Ansprüche 5 bis 8, dadurch gekennzeichnet, daß die Copolymerisationstemperatur zwischen 30 °C und 120 °C liegt.

10. Verfahren nach einem der Ansprüche 5 bis 9, dadurch gekennzeichnet, daß der Copolymerisationsdruck zwischen 5 bar und 80 bar liegt.

11. Verfahren nach einem der Ansprüche 5 bis 10, dadurch gekennzeichnet, daß das Copolymer mittels Fällung in einer Flüssigkeit aus dem Reaktionsmilieu isoliert wird, die in bezug auf das Copolymer ein Nichtlösemittel darstellt, jedoch mit dem Lösemittel des Reaktionsmilieus mischbar ist.

12. Verfahren nach Anspruch 11, dadurch gekennzeichnet, daß die Flüssigkeit, die das Nichtlösemittel darstellt, Wasser ist.

13. Verfahren nach einem der Ansprüche 5 bis 12, dadurch gekennzeichnet, daß das Copolymer nach der Trocknung in Form fein verteilter Teilchen vorliegt.

14. Verfahren nach Anspruch 13, dadurch gekennzeichnet, daß die Teilchen eine granulometrische Verteilung von einigen Mikron bis einigen Millimetern aufweisen.

15. Verfahren nach Anspruch 13 oder 14, dadurch gekennzeichnet, daß die Größe der Teilchen zwischen 50 Mikron und 4 Millimetern liegt.

16. Farbe in Pulverform, erhalten ausgehend von den Copolymeren nach den Ansprüchen 1 bis 4.

## Claims

1. Curable copolymer containing the residues of the copolymerization of a fluorinated monomer and of an allylic derivative, characterized in that:
a) the fluorinated monomer residues originate from the combination of tetrafluoroethylene with vinylidene fluoride, and
b) the allylic derivative is of formula: 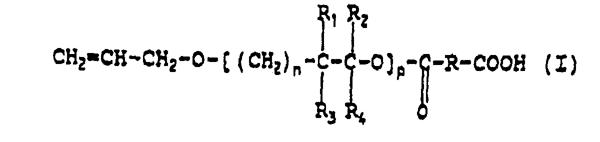
R representing a linear, branched or cyclic alkyl chain not containing unsaturation and possessing from 2 to 12 carbon atoms,
R₁, R₂, R₃ and R₄, which may be identical or different, being chosen from H, CH₃, CH₂-CH₃, OH and CH₂OH,
n is 0 or 1,
p is a value from 0 to 3, and
c) being in the form of particles which can be reduced to a powder by grinding at room temperature.

2. Curable copolymer according to Claim 1, characterized in that, per 100 mol of fluorinated monomers, the combination consists of:
- 45 to 85 mol of vinylidene fluoride,
- 15 to 55 mol of tetrafluoroethylene.

3. Curable copolymer according to either of Claims 1 and 2, characterized in that it comprises the monomer residues originating from:
- 45 to 85 mol of vinylidene fluoride,
- 15 to 55 mol of tetrafluoroethylene,
- 3 to 20 mol of the allylic derivative (I) per 100 mol of the vinylidene fluoride/tetrafluoroethylene combination.

4. Copolymer according to one of Claims 1 to 3, characterized in that its molecular mass is between 2500 and 30,000.

5. Process for the manufacture of a curable copolymer based on a fluorinated monomer and an allylic derivative, characterized in that the following are copolymerized:
- vinylidene fluoride,
- tetrafluoroethylene and
- an allylic derivative as defined in Claim 1.

6. Process according to Claim 5, characterized in that, per 100 mol of fluorinated monomers:
- 45 to 85 mol represent vinylidene fluoride,
- 15 to 55 mol represent tetrafluoroethylene.

7. Process according to one of Claims 5 or 6, characterized in that, per 100 mol of the combination of fluorinated monomers, there are used:
- 45 to 85 mol of vinylidene fluoride per
- 15 to 55 mol of tetrafluoroethylene,
- 3 to 20 mol of the allylic derivative as defined in Claim 1.

8. Process according to one of Claims 5 to 7, characterized in that the copolymerization is carried out in solution in an organic solvent.

9. Process according to one of Claims 5 to 8, characterized in that the copolymerization temperature is between 30 and 120°C.

10. Process according to one of Claims 5 to 9, characterized in that the copolymerization pressure is between 5 and 80 bar.

11. Process according to one of Claims 5 to 10, characterized in that the copolymer is extracted from the reaction medium by precipitation in a liquid which is a non-solvent for the copolymer but is miscible with the solvent of the reaction medium.

12. Process according to Claim 11, characterized in that the non-solvent liquid is water.

13. Process according to one of Claims 5 to 12, characterized in that after drying the copolymer is in the form of dispersed particles.

14. Process according to Claim 13, characterized in that the particles possess a particle size distribution of between a few microns and several millimetres.

15. Process according to one of Claims 13 or 14, characterized in that the particle size is between 50 microns and 4 millimetres.

16. Powder paint obtained from the copolymers of Claims 1 to 4.
